# EUROPÄISCHE PATENTSCHRIFT

(11) **EP 2 460 577 B1**
(45) Veröffentlichungstag und Bekanntmachung des Hinweises auf die Patenterteilung: **15.03.2017**
(21) Anmeldenummer: 11009125.3
(22) Anmeldetag: 17.11.2011
(51) Int. Cl.: B01D 53/14, B01D 3/14, B01D 53/18

(54) **Ölwaschkolonne und deren Verwendung für Spaltgaswaschung**
Oil washing column and use for washing cracked gas
Colonne de nettoyage d'huile et son utilisation pour le lavage de gaz de craquage

(30) Priorität: 03.12.2010 DE 102010053187
(43) Veröffentlichungstag der Anmeldung: 06.06.2012
(73) Patentinhaber: Linde Aktiengesellschaft, 80331 München (DE)
(72) Erfinder: Alzner, Gerhard, 81476 München (DE); Matten, Christian, 82049 Pullach (DE)
(74) Vertreter: Galander, Marcus

(56) Entgegenhaltungen:
- WO-A1-00/44694
- WO-A1-00/53561
- WO-A1-03/057657
- DE-A1- 3 738 913
- FR-A1- 2 938 453

## Beschreibung

Die Erfindung betrifft eine Kolonne gemäß dem Oberbegriff des Anspruches 1.

Olefine wie Ethylen oder Propylen werden in Anlagen zur Herstellung von Kohlenwasserstoffen durch die thermische Spaltung eines Kohlenwasserstoff-haltigen Einsatzes erzeugt. Die längerkettigen Kohlenwasserstoffe des Kohlenwasserstoff-haltigen Einsatzes werden dabei unter Anwesenheit von Dampf thermisch in kürzerkettige Kohlenwasserstoffe wie die gewünschten Produkte Ethylen und Propylen aufgespalten. Derartige Verfahren werden als Steamcracken oder Pyrolyse von Kohlenwasserstoffen bezeichnet.

Die Kohlenwasserstoff-haltigen Einsätze können dabei sehr verschieden hinsichtlich der Zusammensetzung und des Gemisches aus einzelnen längerkettigen Kohlenwasserstoffen sowie im Aggregatzustand sein. Es werden dabei sowohl gasförmige Einsätze als auch flüssige Einsätze gespalten, wobei die flüssigen Einsätze in der Regel höhere Anteile an längerkettigen Kohlenwasserstoffen und einen daraus resultierenden höheren Siedepunkt aufweisen. Als derartige flüssige Einsätze kommen beispielsweise Naphtha oder Gaskondensate in Frage. Ein typischer Naphthaeinsatz hat einen Siedepunkt im Bereich zwischen 160°C und 170 °C, während für gewöhnlich Gaskondensate einen Siedepunkt über 250 °C aufweisen.

Der Kohlenwasserstoff-haltige Einsatzstoff wie Naphtha wird in die Konvektionszone eines Spaltofens geführt, auf 550 °C bis 650 °C vorgewärmt und in die gasförmige Phase überführt. In der Konvektionszone wird dem Kohlenwasserstoff-haltigen Einsatzdampf nunmehr heißer Prozessdampf zugegeben. Das gasförmige Gemisch aus Kohlenwasserstoff-haltigem Einsatz und Wasserdampf wird aus der Konvektionszone in die beheizten Spalt- oder Pyrolyserohre des Spalt- oder Pyrolyseofens geführt. Im Inneren der beheizten Spaltrohre herrschen dabei Temperaturen im Bereich von 800 °C bis 850 °C, die zur Aufspaltung der längerkettigen Kohlenwasserstoffe des Einsatzes in kürzerkettige, bevorzugt ungesättigte Kohlenwasserstoffe, führt. Der zugegebene Prozessdampf dient dabei der Partialdruckerniedrigung der einzelnen Reaktionsteilnehmer, sowie der Verhinderung einer erneuten Aneinanderlagerung bereits gespaltener, kürzerkettiger Kohlenwasserstoffe. Die Verweilzeit in den Spaltrohren des Spaltofens beträgt dabei typischerweise zwischen 0.2 und 0.6 Sekunden.

Das mit einer Temperatur von ca. 850 °C aus dem Spaltofen austretende Spaltgas besteht zum größten Teil aus Ethan, anderen Olefinen (Propen) und Diolefinen und wird rasch auf ca. 400 °C abgekühlt, um Sekundärreaktionen der sehr reaktionsfreudigen Spaltprodukte zu vermeiden. Das derart abgekühlte Spaltgas wird als Erstes in eine sogenannte Ölwaschkolonne geführt.

Die vorliegende Erfindung betrifft eine Kolonne, die als derartige Ölwaschkolonne verwendet werden kann und im Stand der Technik auch als Primary Fractionator oder Oil Quench Tower bezeichnet wird. Eine derartige Kolonne, wie sie Gegenstand der Erfindung ist, wird hauptsächlich in Anlagen zur Herstellung von Olefinen mittels Dampfspaltung eines Kohlenwasserstoff-haltigen Einsatzes, wie Naphtha oder schwerer siedender Kohlenwasserstoffen, verwendet. Im Folgenden wird eine derartige Kolonne als Ölwaschkolonne bezeichnet. Der Kohlenwasserstoff-haltige Einsatz wird im Folgenden durchgängig als Naphtha bezeichnet, wobei Naphtha hier beispielhaft für Kohlenwasserstoff-haltige Einsätze wie Naphtha oder schwerer siedende Kohlenwasserstoffzusammensetzungen, wie beispielsweise Gaskondensate, steht.

Die Ölwaschkolonne dient in einer derartigen Anlage dazu, das entstandene Spaltgas weiter abzukühlen und in einem ersten Zerlegungsschritt eine Fraktion aus schweren Kohlenwasserstoffen, im Folgenden als Ölfraktion bezeichnet, auszukondensieren und vom Spaltgas abzutrennen. Um die Wärme des Spaltgases in der Anlage weiter zu nutzen, weist die abgetrennte Ölfraktion eine Mindesttemperatur auf und wird in weiteren Prozessschritten der Anlage als Wärmeträger eingesetzt.

Eine derartige Ölwaschkolonne besteht aus einem zylinderförmigen Behälter, welcher im unteren Bereich eine erste Zuführung für das Spaltgas aufweist. Vom Kopf der Kolonne wird über einen Abzug eine Gasphase abgezogen, welche aus dem abgekühlten und von der Ölfraktion getrennten Spaltgas besteht. Diese Gasphase wird im Folgenden als Kopfprodukt bezeichnet. Die Ölwaschkolonne ist dabei in zwei verfahrenstechnische Teile unterteilt, wobei der obere Teil als Benzinabschnitt und der untere Teil als Ölabschnitt bezeichnet werden. Sowohl im Ölabschnitt als auch im Benzinabschnitt werden Stoffaustauschelemente angeordnet, wobei der Ölabschnitt verschmutzungsunanfällige Stoffaustauschelemente aufweist und der Benzinabschnitt Stoffaustauschelemente aufweist, welche eine höhere Wirksamkeit haben als die Stoffaustauschelemente des Ölabschnittes. Im oberen Teil des Behälters weist die Kolonne eine zweite Zuführung auf, durch die eine Kohlenwasserstoff-haltige Flüssigphase als Waschmittel der Kolonne aufgegeben wird.

Alle Angaben wie oben, unten oder seitlich beziehen sich im Rahmen dieser Anmeldung auf die Orientierung der Kolonne im bestimmungsgemäßen Gebrauch.

Die Kolonne hat am unteren Ende des Ölabschnitts einen zweiten Abzug, über den eine Kohlenwasserstoff-haltige Flüssigphase abgezogen wird, welche die Ölfraktion bildet. Am oberen Ende des Ölabschnittes befindet sich eine dritte Zuführung, über die zumindest ein Teil der flüssigen Ölfraktion dem Ölabschnitt als Waschmittel aufgegeben wird.

Wie bereits erwähnt, dient die Ölwaschkolonne dazu, das Spaltgas auf einen Temperaturbereich von ca. 100 °C abzukühlen und die, in diesem Temperaturbereich kondensierbaren, schwereren Kohlenwasserstoffe abzuscheiden. Um die Wärme der Kondensate auf unterschiedlich hohen Temperaturniveaus zu gewinnen, ist die Ölwaschkolonne in die beiden Abschnitte bzw. Waschkreisläufe, den Benzinabschnitt und den Ölabschnitt unterteilt. Im Benzinabschnitt fallen die leichteren Kondensate an, welche hauptsächlich aus Kohlenwasserstoffen mit 8 bis 10 Kohlenwasserstoffatomen bestehen. Im Ölabschnitt werden Kohlenwasserstoffe herauskondensiert, die mehr als 10 Kohlenstoffatome haben. Daher gilt für die Ölwaschkolonne generell, dass der Anteil der längerkettigen Moleküle von oben nach unten zunimmt. Feststoffpartikel wie Ruße und Teere sind hauptsächlich im unteren Ölabschnitt aus der Gasphase ausgeschieden und in der Flüssigphase vorhanden. Die Viskosität der Flüssigphase nimmt in der Kolonne ebenfalls von oben nach unten zu. Daher weist die Ölwaschkolonne im unteren Ölabschnitt verschmutzungsunanfällige Stoffaustauschelement auf. Im oberen Benzinabschnitt sind weniger Polymere oder längerkettige Kohlenwasserstoffe anzutreffen. Daher können hier Stoffaustauschelemente mit einer höheren Wirksamkeit als die Stoffaustauschelemente des Ölabschnittes verwendet werden.

Eine derartige Ölwaschkolonne nach dem Stand der Technik wird von J.B.F. Emmiliano, W.Quadro, H. Z. Kister und D.R. Summers in "Warstrategies to achieve peace in a primary fractionator" (Spring National Meeting, San Antonio, Texas, 21-25. März 2010) beschrieben.

Das größte Problem derartiger Ölwaschkolonnen ist die Verschmutzung durch Polymerbildung. Für die Polymerbildung gibt es dabei mindestens zwei Gründe.

Zum einen enthalten die kondensierenden Komponenten Monomere (dies sind beispielsweise ungesättigte Kohlenwasserstoffe wie Naphtene, Idene oder Styrene). Diese Monomere können unter bestimmten Bedingungen Polymere bilden. Diese Bedingungen wären polymerisationsfähiger Temperaturbereich, Auftreten der Monomore in hinreichend großer Konzentration, große Verweilzeit auf den Einbauten und die Anwesenheit von Rost. Diese Einflüsse werden als "fouling factors" bezeichnet. Optimalerweise ist das Zustandekommen aller vier Bedingungen zu verhindern.

Zum anderen verdampft der größte Teil der flüssigen Kohlenwasserstofffraktion, die dem Benzinabschnitt als Waschmittel aufgegeben wird, über den Benzinabschnitt auf dem Weg nach unten. Dies führt dazu, dass am unteren Ende des Benzinabschnitts die geringste Flüssigkeitsmenge und somit die größte Verweildauer der Flüssigkeit auf den Stoffaustauschelementen vorhanden ist. Zusätzlich steigt bei steigendem Rückfluss die Verdampfung der längerkettigen Kohlenwasserstoffe und damit die Temperatur des gasförmigen Kopfproduktes an.

Daher kommt es häufig bei Ölwaschkolonnen nach dem Stand der Technik zu Polymerbildung und zur Verlegung an den unteren Stoffaustauschelementen des Benzinabschnittes. Die Verwendung von verschmutzungsunanfälligeren Stoffaustauschelementen ist hier nicht möglich, da sonst für die Erfüllung der Trennaufgabe die Gesamthöhe der Kolonne durch die zunehmende Größe des Benzinabschnittes in nicht akzeptabler Weise steigen würde.

Der vorliegenden Erfindung liegt somit die Aufgabe zugrunde, eine Kolonne der eingangs erwähnten Art derart auszugestalten, dass die Probleme mit Polymerbildung und Verlegung minimiert werden.

Die vorliegende Aufgabe wird durch eine Kolonne mit den Merkmalen des Anspruches 1 gelöst. Vorteilhafte Ausgestaltungen der erfindungsgemäßen Kolonne werden in den Unteransprüchen angegeben.

Erfindungsgemäß werden am untersten Ende des Benzinabschnittes Mittel angeordnet, die geeignet sind, einen großen Teil der im Benzinabschnitt herabströmenden Flüssigphase zu sammeln und bei der erfindungsgemäßen Kolonne befindet sich am untersten Ende des Benzinabschnittes ein dritter Abzug für eine Kohlenwasserstoff-haltige Flüssigphase, der eine Strömungsverbindung mit dem Mittel zum Sammeln der im Benzinabschnitt herabströmenden Flüssigphase und eine Strömungsverbindung mit einer vierten Zuführung in den Behälter oberhalb des dritten Abzuges aufweist.

Der Grundgedanke der Erfindung ist, die Erhöhung der Flüssigkeitsmenge in dem unteren Teil des Benzinabschnittes. Wie bereits bei der Schilderung des Standes der Technik erwähnt, entsteht im unteren Teil des Benzinabschnittes, speziell an den untersten Stoffaustauschelementen des Benzinabschnittes, die größte Gefahr der Polymerbildung. Erfindungsgemäß wird hier durch geeignete Mittel die herabströmende Flüssigphase gesammelt und über einen Abzug, der in Strömungsverbindung mit einer Zuführung oberhalb des Abzuges steht, der Kolonne wieder aufgegeben. Die Kolonne erhält somit einen zusätzlichen Kreislauf, durch den in den unteren Teilen des Benzinabschnittes zusätzlich Flüssigphase bzw. Waschmittel auf die Stoffaustauschelemente im unteren Teil des Benzinabschnittes aufgegeben wird. In diesem zusätzlichen Kreislauf können relativ große Mengen Flüssigkeit zirkuliert werden, so dass die Verweilzeit der Monomere an den unteren Stoffaustauschelementen des Benzinabschnittes deutlich reduziert wird. Eventuell bereits gebildete Polymere werden durch die großen zirkulierenden Flüssigkeitsmengen quasi mechanisch weggespült. Die Abzüge, Zuführungen und strömungstechnischen Verbindungen sind dabei so angeordnet, dass eine reine Flüssigphase in die Kolonne zurückgeführt wird. Diese in die Kolonne zurückgeführte Flüssigphase wird dabei bevorzugt vor der Rückführung in die Kolonne abgekühlt.

Vorteilhafterweise sind im Benzinabschnitt Stoffaustauschböden, wie Siebböden, Ventilböden, Gitterpackungen (auch als Grid bezeichnet), strukturierte Packungen und/oder regellose Füllkörperschüttungen angeordnet und im Ölabschnitt Prallböden (auch als Baffle Tray bezeichnet), Disk-Donut Böden und/oder Kaskadenböden angeordnet. Die genannten Stoffaustauschelemente im Ölabschnitt zeichnen sich durch eine sehr geringe Verschmutzungsanfälligkeit aus. Die genannten Stoffaustauschelemente des Benzinabschnittes sind deutlich wirksamer und daher für den Benzinabschnitt geeignet.

Bevorzugt werden im Ölabschnitt Kaskadenböden und im Benzinabschnitt Ventilböden mit Ablaufschacht angeordnet. In dieser Ausgestaltung der Erfindung werden im Ölabschnitt Kaskadenböden verwendet. Kaskadenböden bestehen aus Winkelelementen, die parallel und voneinander beabstandet über den gesamten Querschnitt des Behälters angeordnet sind. Die Winkelspitze zeigt dabei nach oben, so dass die Flüssigkeit entlang der Seiten des Winkelelements herabströmt. Die Kaskadenböden werden dabei bevorzugt versetzt angeordnet, d.h. derart, dass sich die Winkelelemente eines sich darunter liegenden Kaskadenbodens genau unterhalb der Lücken des darüber liegenden Kaskadenbodens befinden. Kaskadenböden zeichnen sich darüber hinaus durch gute Wirksamkeit aus. Im oberen Abschnitt, im Benzinabschnitt, werden bevorzugt Ventilböden mit Ablaufschacht angeordnet. Hierbei können sowohl Ventilböden mit seitlichem Ablaufschacht als auch Ventilböden mit zentralem Ablaufschacht verwendet werden. Ventilböden zeichnen sich durch eine hohe Wirksamkeit aus. Bevorzugt werden Ventilböden verwendet, die Merkmale von sogenannten Pusher-Valves aufweisen. Bei sogenannten Pusher-Valves handelt es sich um Ventile, die derartig trapezförmig ausgestaltet sind, dass die Flüssigkeit durch die von unten durch den Ventilboden strömende Gasphase in eine Richtung, speziell in Richtung Ablaufschacht, gelenkt wird. Durch das Lenken der Gasphase wird somit auch eine gelenkte Flüssigkeitsströmung der Flüssigphase auf dem Ventilboden induziert. Somit werden Toträume auf dem Ventilboden mit hohen Standzeiten vermieden. Dadurch wird das Risiko der Polymerbildung im Benzinabschnitt weiter reduziert. Die in dieser Ausgestaltung der Erfindung verwendeten Kaskadenböden im Ölabschnitt sind durch ihre winklige Ausgestaltung extrem verschmutzungsunanfällig. Eine Verlegung derartiger Einbauten ist daher nahezu unmöglich.

In einer vorteilhaften Ausgestaltung der Erfindung bildet der Ablaufschacht des untersten Ventilbodens des Benzinabschnittes das Mittel zum Sammeln des größten Teils der herabströmenden Flüssigphase. Dieser Ablaufschacht ist dabei in Strömungsverbindung mit dem daneben angeordneten dritten Abzug. In dieser Ausgestaltung der Erfindung weist der Behälter der erfindungsgemäßen Ölwaschkolonne einen Abzug auf, der in Strömungsverbindung mit dem untersten Ablaufschacht des untersten Ventilbodens im Benzinabschnitt steht. Aus diesem Ablaufschacht kann so die Flüssigphase abgezogen werden, die dann weiter oben erfindungsgemäß über eine Zuführung dem Benzinabschnitt wieder aufgegeben wird.

Als besonders vorteilhaft hat es sich erwiesen, den dritten Abzug vom unteren Ende des Benzinabschnittes mit einer Verbindung zu einem Vorratsbehälter zu versehen. Durch die Verbindung des Abzuges mit einem Vorratsbehälter kann in dieser Ausgestaltung der Erfindung eine große Menge Flüssigkeit gesammelt und entsprechend als Rücklauf dem unteren Teil des Benzinabschnittes aufgegeben werden.

Besonders bevorzugt weist die Kolonne oberhalb des dritten Abzuges eine Gaspendelleitung auf, wobei die Gaspendelleitung eine Verbindung mit dem Vorratsbehälter aufweist und somit für Druckausgleich sorgt.

Des Weiteren weist bevorzugt die dritte Zuführung eine strömungstechnische Verbindung mit dem Vorratsbehälter auf. In dieser Ausgestaltung der Erfindung wird ein Teil der Flüssigphase aus dem Vorratsbehälter abgezogen und über die dritte Zuführung in die als Waschmittel fungierende Flüssigphase des Ölabschnittes geführt. Bevorzugt wird die aus dem Flüssigkeitsvorratsbehälter abgezogene Flüssigphase vor der Zuführung in die dritte Zuführung gekühlt. Die vom untersten Boden des Benzinabschnitts abgezogene und in den Vorratsbehälter geführte Flüssigphase ist eine Benzinfraktion. Ein Teil dieser flüssigen Benzinfraktion wird aus dem Vorratsbehälter entnommen, gekühlt und mit der schwereren Ölfraktion gemischt, welche das Waschmittel des Ölabschnittes bildet. Dadurch gelingt es in dieser Ausgestaltung der Erfindung, die Viskosität des Waschmittels im Ölabschnitt auf den verfahrenstechnisch optimalen Wert einzustellen.

Gemäß einer alternativen Ausgestaltung der Erfindung weist der Behälter unterhalb des Ölabschnittes einen dritten verfahrenstechnischen Abschnitt auf, welcher als Schwerölabschnitt bezeichnet wird, wobei der Behälter am unteren Ende einen vierten Abzug aufweist, wobei sich am oberen Ende des Schwerölabschnitts eine fünfte Zuführung befindet, welche eine Strömungsverbindung zum vierten Abzug aufweist und wobei der Schwerölabschnitt verschmutzungsunanfällige Stoffaustauschelemente, bevorzugt die gleichen Stoffaustauschelemente wie der Ölabschnitt, aufweist. Diese Ausgestaltung der Erfindung eignet sich besonders als Ölwaschkolonne für einen Kohlenwasserstoff-haltigen Einsatz, der schwerer siedet als Naphta. In dieser Ausgestaltung der Erfindung wird die Kolonne in 3 verfahrenstechnische Abschnitte unterteilt, wobei im untersten Schwerölabschnitt eine sogenannte Schwerölfraktion und im darüberliegenden Ölabschnitt die sogenannte Ölfraktion vom Spaltgas abgetrennt wird. Diese Ausgestaltung der Erfindung funktioniert ganz analog zu einer Kolonne mit zwei verfahrenstechnischen Abschnitten, lediglich der Schwerölabschnitt kommt als zusätzlicher unterster Abschnitt der Kolonne dazu.

Die erfindungsgemäße Kolonne ist insbesondere zur Verwendung als Ölwaschkolonne in einer Anlage zur Herstellung von Olefinen aus Naphtha oder schwerer siedenden Kohlenwasserstoff-haltigen Einsätzen mittels Spaltung des Einsatzes geeignet.

Mit Hilfe der vorliegenden Erfindung gelingt es insbesondere, die Gefahren durch Polymerbildung und Verlegungen in Ölwaschkolonnen gegenüber dem Stand der Technik deutlich zu minimieren.

Im Folgenden soll die Erfindung anhand des in der Figur dargestellten Ausführungsbeispieles näher erläutert werden.

Es zeigt:
- Figur 1: eine Ausgestaltung einer erfindungsgemäßen Kolonne mit 2 verfahrenstechnischen Abschnitten als Ölwaschkolonne in einer Anlage zur Herstellung von Olefinen mittels Spaltung von Naphtha
- Figur 2: eine Ausgestaltung einer erfindungsgemäßen Kolonne mit 3 verfahrenstechnischen Abschnitten als Ölwaschkolonne in einer Anlage zur Herstellung von Olefinen mittels Spaltung von schwerer siedenden Kohlenwasserstoff-haltigen Einsätzen

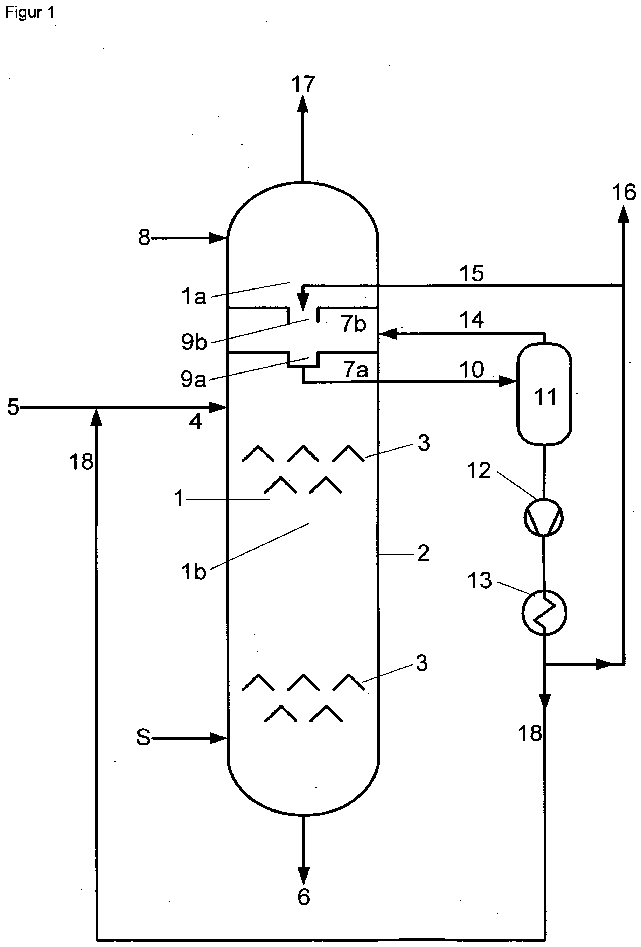

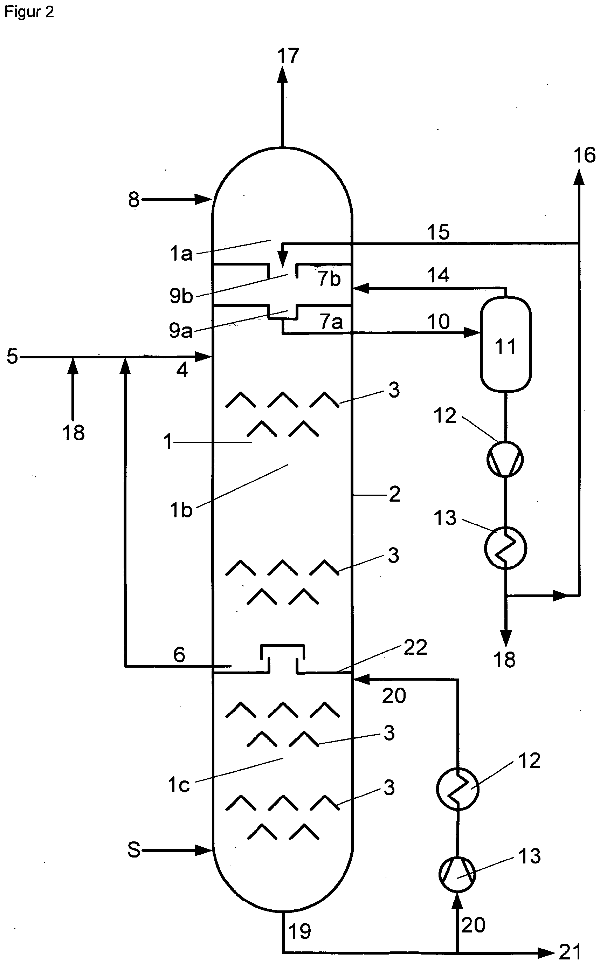

Die Darstellungen der beiden Ausführungsbeispiele der erfindungsgemäßen Kolonne in den Figuren 1 und 2 sind schematisch und nicht maßstabsgetreu.

Figur 1 zeigt eine Ausgestaltung einer erfindungsgemäßen Kolonne 1 mit 2 verfahrenstechnischen Abschnitten. Die Kolonne weist einen im Wesentlichen zylindermantelförmigen Behälter 2 auf und ist in den Benzinabschnitt 1 a und den Ölabschnitt 1 b verfahrenstechnisch unterteilt. Das vorgekühlte Spaltgas S wird mit einer Temperatur zwischen ca. 400 °C und 600 °C der Ölwaschkolonne 1 im Bodenbereich des Ölabschnittes 1 b zugeführt. Der Ölabschnitt 1 b der Ölwaschkolonne 1 weist dabei eine Vielzahl von Kaskadenböden 3 auf, die übereinander angeordnet sind. Jeweils benachbarte Kaskadenböden 3 sind dabei so angeordnet, dass die Winkelelemente eines darunter liegenden Kaskadenbodens in einer Linie mit den Lücken des darüber liegenden Kaskadenbodens angeordnet sind.

Das Spaltgas S durchströmt den gesamten Behälter 2 der Kolonne 1 von unten nach oben. Im unteren Ölabschnitt 1b wird eine Kohlenwasserstoff-haltige Flüssigphase als Waschmittel verwendet. Das Waschmittel 4 strömt den Ölabschnitt von oben nach unten herab und wird durch die Kaskadenböden 3 in intensiven Kontakt mit der aufsteigenden Gasphase S gebracht. Dadurch wird aus der aufsteigenden Spaltgasphase S der Anteil am schwersten Kohlenwasserstoffelemente herausgewaschen. Diese sammeln sich als flüssige Ölphase am Boden des Ölabschnittes und werden vom Kolonnenboden abgezogen 6. Die abgezogene Phase 6 wird gekühlt und von festen Kokspartikeln befreit, um anschließend als Waschmittel 5 zumindest teilweise in der Kolonne 1 wieder verwendet zu werden.

Der obere Benzinabschnitt 1 a weist mehrere hautsächlich 1, 2 oder mehrflutige Ventilböden auf. In der Figur sind exemplarisch zwei Ventilböden 7a, 7b dargestellt, die in dieser Ausgestaltung als 2-flutige Böden über einen zentralen Ablaufschacht 9a, 9b verfügen. Am Kopf des Behälters 2 wird dem Benzinabschnitt 1 a eine flüssige Kohlenwasserstoffphase 8 als Waschmittel zugeführt, die hauptsächlich aus Kohlenwasserstoff mit 8 bis 10 Kohlenstoffatomen, der Benzinfraktion, besteht. Diese Flüssigphase dient der weiteren Kühlung der aufsteigenden Gasphase S und dem weiteren Herauswaschen von allen Kohlenwasserstoffen aus der Gasphase, die mehr als 10 Kohlenstoffatome aufweisen.

Der Ablaufschacht 9a des untersten Ventilbodens 7a bildet das Mittel zum Sammeln der herabströmenden Flüssigkeitsphase im Benzinabschnitt 1 a und wird mit dem seitlichen Abzug 10 strömungstechnisch verbunden. Über den seitlichen Abzug 10 wird die gesammelte Flüssigphase des Benzinabschnittes 1 a in den Vorratsbehälter 11 geführt. Der Vorratsbehälter 11 bildet ein Flüssigkeitsreservoir und dient als Vorlage für die Pumpe 12. Zusätzlich weist die Kolonne 1 eine Gaspendelleitung 14 auf, die mit dem Vorratsbehälter 11 verbunden ist und für Druckausgleich sorgt.

Aus dem Vorratsbehälter 11 wird mittels Pumpe 12 die über den Wärmetauscher 13 abgekühlte reine Flüssigphase 15 dem Benzinabschnitt1a als Rücklauf wieder aufgegeben. Die Flüssigphase 15 wird bevorzugt auf den Ventilboden 7b aufgeben, welcher 2 Böden über dem untersten Ventilboden 7a angeordnet ist. Die zurückgeführte Flüssigphase 15 ist eine flüssige Benzinfraktion. Ein Teil 16 der flüssigen Benzinfraktion 15 wird zu einer optionalen Weiterverarbeitung geführt.

Ein anderer Teil 18 der flüssigen Benzinfraktion 15 aus dem Vorratsbehälter 11 wird mit der flüssige Ölfraktion 5 vermischt und dem Ölabschnitt 1 b als Waschmittel 4 aufgegeben.

Die gereinigte und abgekühlte Spaltgas S verläßt die Ölwaschkolonne 1 über Kopf als Kopfprodukt 17.

Alternativ können anstatt der dargestellten Ventilböden 7a, 7b auch Siebböden (nicht dargestellt) verwendet werden. Sowohl die Siebböden als auch die Ventilböden werden dabei mit gezackten Überlaufwehren (nicht dargestellt) und Einlaufwehren (nicht dargestellt) versehen, um eine möglichst kontrollierte Strömung vom darüberliegenden Stoffaustauschboden zum darunter liegenden Stoffaustauschboden zu gewährleisten.

Figur 2 zeigt eine Ausgestaltung der Kolonne mit 3 verfahrenstechnischen Abschnitten, wie sie als Ölwaschkolonne bei der Spaltung eines schwerer als Naphta siedenden Kohlenwasserstoff-haltigen Einsatzes verwendet wird. Bei derart schweren Einsätzen wird die erfindungsgemäße Kolonne in 3 verfahrenstechnische Teile aufgeteilt. Die Funktion der oberen beiden Teile, Benzinabschnitt 1a und Ölabschnitt 1b ist dabei relativ analog zum Ausführungsbeispiel nach Figur 1. Gleiche Teile wurden in beiden Figuren mit gleichen Bezugsziffern versehen.

Im Wesentlichen unterscheidet sich das Ausführungsbeispiel der Figur 2 von dem Ausführungsbeispiel gemäß Figur 1 dadurch, dass im untersten Abschnitt der Kolonne 1 eine weitere Kohlenwasserstofffraktion aus dem Spaltgas S abgetrennt wird. Die im untersten Abschnitt 1c, im Folgenden als Schwerölabschnitt 1 c bezeichnet, abgetrennte Kohlenwasserstofffraktion 19 ist dabei schwerer siedende als die im Ölabschnitt 1 b abgetrennte Kohlenwasserstofffraktion 6. Um die Kohlenwasserstofffraktion 6 analog zum Ausführungsbeispiel aus Figur 1 abzutrennen und als Teil des Waschmittels 4 des Ölabschnitts 1 b zu verwenden, sind Ölabschnitt 1b und Schwerölabschnitt 1 c durch einen Kaminboden 22 voneinander getrennt. Der Kaminboden 22 weist Kamine (nicht dargestellt) auf, durch die das Spaltgas vom Schwerölabschnitt 1 c in den Ölabschnitt 1 b aufsteigen kann. Auf dem Kaminboden 22 wird analog zu Figur 1 eine flüssige Kohlenwasserstoffphase 6 gesammelt und zusammen mit einem Teil 18 der flüssigen Benzinfraktion 15 aus dem Vorratsbehälter 11 und einer flüssigen Ölfraktion 5 als Waschmittels 4 dem Ölabschnitt 1 b wieder aufgegeben.

Vom untersten Boden der Kolonne 1 wird eine flüssige, schwerer siedende Kohlenwasserstoffphase über den vierten Abzug 19 mit definierter Temperatur abgezogen. Die abgezogene flüssige Kohlenwasserstoffphase wird in hauptsächlich als Wärmeträger 20 in verschiedene andere Prozessteile der Anlage gepumpt 13. Dort dient die abgezogene Flüssigphase 20 beispielsweise in den Aufkochern von Destillationskolonnen als Wärmeträger und wird so durch indirekten Wärmeaustausch abgekühlt 12. Die abgekühlte Kohlenwasserstoffphase 20 wird anschließend in den Schwerölabschnitt 1c als Waschmittel zurückgeführt.

Der Schwerölabschnitt 1 c weist analog zum Ölabschnitt 1 b Kaskadenböden 3 als Stoffaustauschelemente auf. Dadurch wird ein Stoffaustausch zwischen dem aufsteigendem Spaltgas S und den herabströmenden Waschmittel 20 gewährleistet und die schweren Kohlenwasserstoffe in der Flüssigphase absorbiert.
Ein Teil der vom untersten Ende des Behälters 1 abgezogenen Flüssigphase 19 kann optional zu einer Weiterverarbeitung 21 geführt werden.

## Patentansprüche

1. Kolonne (1) zur Waschung eines Spaltgases, welches aus der Spaltung eines Kohlenwasserstoff-haltigen Einsatzes wie Naphtha oder schwerer siedende Zusammensetzungen entsteht, bestehend aus einem zylinderförmigen Behälter (2), welcher
• im unteren Bereich eine erste Zuführung (S) für das Spaltgas aufweist,
• und am oberen Ende des Behälters (2) einen ersten Abzug (17) für eine Gasphase aufweist,
• wobei der Behälter (2) in mindestens zwei verfahrenstechnische Teile (1a, 1b) unterteilt ist, wobei der oberste Teil als Benzinabschnitt (1 a) und der darunter liegende Teil als Ölabschnitt (1 b) bezeichnet werden,
• wobei der Ölabschnitt (1 b) verschmutzungsunanfällige Stoffaustauschelemente (3) aufweist,
• wobei der Benzinabschnitt (1a) Stoffaustauschelemente (7a, 7b) aufweist, welche eine höhere Wirksamkeit haben als die Stoffaustauschelemente (3) des Ölabschnitts (1 b),
• wobei der Behälter (2) im oberen Teil eine zweite Zuführung (8) für eine Kohlenwasserstoff-haltige Flüssigphase als Waschmittel aufweist,
• wobei der Behälter (2) am unteren Ende des Ölabschnittes einen zweiten Abzug (6) aufweist,
• wobei der Behälter (2) am oberen Ende des Ölabschnitts (1 b) ein dritte Zuführung (4) aufweist, und
• wobei der zweite Abzug (6) am unteren Teil des Ölabschnitts (1 b) eine strömungstechnische Verbindung mit der dritten Zuführung (4) am oberen Ende des Ölabschnitts (1 b) besitzt
**dadurch gekennzeichnet, dass**
• am untersten Ende des Benzinabschnittes (1 a) Mittel (9a) angeordnet sind, die geeignet sind, einen großen Teil der im Benzinabschnitt (1a) herabströmenden Flüssigphase zu sammeln, und
• sich am untersten Ende des Benzinabschnittes (1a) ein dritter Abzug (10) für eine Kohlenwasserstoff-haltige Flüssigphase befindet, der eine Strömungsverbindung mit dem Mittel (9a) zum Sammeln der im Benzinabschnitt (1 a) herabströmenden Flüssigphase und eine Strömungsverbindung mit einer vierten Zuführung (15) in den Behälter (2) oberhalb des dritten Abzugs (10) aufweist.

2. Kolonne (1) nach Anspruch 1, **dadurch gekennzeichnet, dass** im Benzinabschnitt (1a) Stoffaustauschböden wie Siebböden, Ventilböden (7a, 7b), Gitterpackungen, strukturierte Packungen und/oder regellose Füllkörperschüttungen angeordnet sind und im Ölabschnitts (1 b) Prallböden, Disk-Donut Böden und/oder Kaskadenböden (3) angeordnet sind.

3. Kolonne (1) nach Anspruch 1 oder 2, **dadurch gekennzeichnet, dass** im Ölabschnitt (1b) Kaskadenböden (3) und im Benzinabschnitt (1a) Ventilböden (7a, 7b) mit Ablaufschacht (9a, 9b) angeordnet sind.

4. Kolonne (1) nach einem der Ansprüche 1 bis 3, **dadurch gekennzeichnet, dass** der Ablaufschacht (9a) des untersten Ventilbodens (7a) das Mittel (9a) zum Sammeln des größten Teils der herabströmenden Flüssigphase bildet und der Ablaufschacht (9a) in Strömungsverbindung mit dem daneben angeordneten dritten Abzug (10) steht.

5. Kolonne (1) nach einem der Ansprüche 1 bis 4, **dadurch gekennzeichnet, dass** der dritte Abzug (10) vom unteren Ende des Benzinabschnittes (1 a) eine strömungstechnische Verbindung mit einem Vorratsbehälter (11) aufweist.

6. Kolonne (1) nach Anspruch 4, **dadurch gekennzeichnet, dass** die Kolonne (1) oberhalb des dritten Abzuges (10) eine Gaspendelleitung (14) aufweist, wobei die Gaspendelleitung (14) eine strömungstechnische Verbindung mit dem Vorratsbehälter (11) aufweist.

7. Kolonne (1) nach einem der Ansprüche 5 bis 6, **dadurch gekennzeichnet, dass** dritte Zuführung (4) eine strömungstechnische Verbindung mit dem Vorratsbehälter (11) aufweist.

8. Kolonne (1) nach einem der Ansprüche 1 bis 7, **dadurch gekennzeichnet, dass** der Behälter (2) unterhalb des Ölabschnittes (1 b) einen dritten verfahrenstechnischen Abschnitt (1 c) aufweist, welcher als Schwerölabschnitt n(1 c) bezeichnet wird, wobei der Behälter (2) am unteren Ende einen vierten Abzug (19) aufweist, wobei sich am oberen Ende des Schwerölabschnitts (1 c) eine fünfte Zuführung (20) befindet, welche eine Strömungsverbindung zum vierten Abzug (19) aufweist und wobei der Schwerölabschnitt (1c) verschmutzungsunanfällige Stoffaustauschelemente (3), bevorzugt die gleichen Stoffaustauschelemente (3) wie der Ölabschnitt (1 b), aufweist.

9. Verwendung einer Kolonne (1) nach einem der Ansprüche 1 bis 8 als Ölwaschkolonne in einer Anlage zur Herstellung von Olefinen aus Naphtha oder schwerer siedenden Kohlenwasserstoff-haltigen Einsätzen mittels Spaltung des Einsatzes.

## Claims

1. Column (1) for scrubbing a cracking gas which arises from the cracking of a hydrocarbon-containing feed such as naphtha or higher-boiling compositions, consisting of a cylindrical vessel (2) having
• a first feed (S) for the cracking gas in the lower region,
• and having a first draw (17) for a gas phase at the upper end of the vessel (2),
• wherein the vessel (2) is divided into at least two processing sections (1a, 1b), the uppermost section being referred to as gasoline section (1a) and the section beneath as oil section (1b),
• wherein the oil section (1b) has mass transfer elements (3) that are not susceptible to soiling,
• wherein the gasoline section (1a) has mass transfer elements (7a, 7b) having higher efficacy than the mass transfer elements (3) of the oil section (1b),
• wherein the vessel (2) has a second feed (8) for a hydrocarbon-containing liquid phase as scrubbing medium in the upper section,
• wherein the vessel (2) has a second draw (6) at the lower end of the oil section,
• wherein the vessel (2) has a third feed (4) at the upper end of the oil section (1b), and
• wherein the second draw (6) has, at the lower end cf the oil section (1b), a flow connection to the third feed (4) at the upper end of the oil section (1b),
**characterized in that**
• means (9a) arranged at the lowermost end of the gasoline section (1a) are suitable for collecting a large portion of the liquid phase that flows downward within the gasoline section (1a), and
• there is a third draw (10) for a hydrocarbon-containing liquid phase which is at the lowermost end of the gasoline section (1a) and has a flow connection to the means (9a) for collecting the liquid phase flowing downward within the gasoline section (1a) and a flow connection to a fourth feed (15) into the vessel (2) above the third draw (10).

2. Column (1) according to Claim 1, **characterized in**
**that** mass transfer trays such as sieve trays, valve trays (7a, 7b), mesh packings, structured packings and/or random packings are arranged in the gasoline section (1a), and baffle trays, disc-donut trays and/or cascade trays (3) are arranged in the oil section (1b).

3. Column (1) according to Claim 1 or 2, **characterized**
**in that** cascade trays (3) are arranged in the oil section (1b), and valve trays (7a, 7b) with downcomers (9a, 9b) in the gasoline section (1a).

4. Column (1) according to any of Claims 1 to 3,
**characterized in that** the downcomer (9a) of the lowermost valve tray (7a) forms the means (9a) for collecting the major portion of the liquid phase flowing downward, and the downcomer (9a) is in flow connection with the third draw (10) arranged alongside it.

5. Column (1) according to any of Claims 1 to 4,
**characterized in that** the third draw (10) from the lower end of the gasoline section (1a) has a flow connection to a reservoir vessel (11).

6. Column (1) according to Claim 4, **characterized in**
**that** the column (1) has a gas displacement line (14) above the third draw (10), said gas displacement line (14) having a flow connection to the reservoir vessel (11).

7. Column (1) according to either of Claims 5 and 6,
**characterized in that** the third feed (4) has a flow connection to the reservoir vessel (11).

8. Column (1) according to any of Claims 1 to 7,
**characterized in that** the vessel (2) has, below the oil section (1b), a third processing section (1c) which is referred to as heavy oil section (1c), wherein the vessel (2) has a fourth draw (19) at the lower end, wherein there is a fifth feed (20) which is at the upper end of the heavy oil section (1c) and has a flow connection to the fourth draw (19), and wherein the heavy oil section (1c) has mass transfer elements (3) that are not susceptible to soiling, preferably the same mass transfer elements (3) as the oil section (1b).

9. Use of a column (1) according to any of Claims 1 to
8 as oil scrubbing column in a plant for production of olefins from naphtha or higher-boiling hydrocarbon-containing feeds by means of cracking of the feed.

## Revendications

1. Colonne (1) pour le lavage d'un gaz de clivage, qui est formé par le clivage d'une matière première contenant des hydrocarbures telle que le naphta ou des compositions de point d'ébullition plus élevé, constituée par un contenant cylindrique (2), qui
- comprend dans la zone inférieure une première conduite d'alimentation (S) pour le gaz de clivage,
- et comprend à l'extrémité supérieure du contenant (2) une première sortie (17) pour une phase gazeuse,
- le contenant (2) étant divisé en au moins deux parties de procédé (1a, 1b), la partie supérieure étant nommée section d'essence (1a) et la partie inférieure section d'huile (1b),
- la section d'huile (1b) comprenant des éléments d'échange de matière non sensibles aux contaminations (3),
- la section d'essence (1a) comprenant des éléments d'échange de matière (7a, 7b) qui présentent une efficacité plus élevée que les éléments d'échange de matière (3) de la section d'huile (1b),
- le contenant (2) comprenant dans la partie supérieure une deuxième conduite d'alimentation (8) pour une phase liquide contenant des hydrocarbures en tant qu'agent de lavage,
- le contenant (2) comprenant à l'extrémité inférieure de la section d'huile une deuxième sortie (6),
- le contenant (2) comprenant à l'extrémité supérieure de la section d'huile (1b) une troisième conduite d'alimentation (4), et
- la deuxième sortie (6) comprenant dans la partie inférieure de la section d'huile (1b) une connexion d'écoulement avec la troisième conduite d'alimentation (4) à l'extrémité supérieure de la section d'huile (1b),
**caractérisé en ce que**
- des moyens (9a) sont agencés à l'extrémité inférieure de la section d'essence (1a), qui sont appropriés pour collecter une grande partie de la phase liquide qui s'écoule depuis la section d'essence (1a), et
- une troisième sortie (10) pour une phase liquide contenant des hydrocarbures se trouve à l'extrémité inférieure de la section d'essence (1a), qui comprend une connexion d'écoulement avec le moyen (9a) de collecte de la phase liquide s'écoulant à partir de la section d'essence (1a) et une connexion d'écoulement avec une quatrième conduite d'alimentation (15) dans le contenant (2) au-dessus de la troisième sortie (10).

2. Colonne (1) selon la revendication 1, **caractérisée**
**en ce que** des plateaux d'échange de matière tels que des plateaux perforés, des plateaux à soupapes (7a, 7b), des garnissages en grille, des garnissages structurés et/ou des garnissages de corps de remplissage irréguliers sont agencés dans la section d'essence (1a), et des plateaux de déflection, des plateaux à disque et anneau et/ou des plateaux en cascade (3) sont agencés dans la section d'huile (1b).

3. Colonne (1) selon la revendication 1 ou 2,
**caractérisée en ce que** des plateaux en cascade (3) sont agencés dans la section d'huile (1b) et des plateaux à soupapes (7a, 7b) à puits de sortie (9a, 9b) dans la section d'essence (1a).

4. Colonne (1) selon l'une quelconque des revendications 1 à 3, **caractérisée en ce que** le puits de sortie (9a) du plateau à soupapes inférieur (7a) forme le moyen (9a) de collecte de la plus grande partie de la phase liquide s'écoulant, et le puits de sortie (9a) se trouve en connexion d'écoulement avec la troisième sortie (10) agencée à côté.

5. Colonne (1) selon l'une quelconque des revendications 1 à 4, **caractérisée en ce que** la troisième sortie (10) comprend une connexion d'écoulement depuis l'extrémité inférieure de la section d'essence (1a) avec un contenant de stockage (11).

6. Colonne (1) selon la revendication 4, **caractérisée**
**en ce que** la colonne (1) comprend au-dessus de la troisième sortie (10) une conduite d'équilibrage de pression (14), la conduit d'équilibrage de pression (14) comprenant une connexion d'écoulement avec le contenant de stockage (11).

7. Colonne (1) selon l'une quelconque des revendications 5 à 6, **caractérisée en ce que** la troisième conduite d'alimentation (4) comprend une connexion d'écoulement avec le contenant de stockage (11).

8. Colonne (1) selon l'une quelconque des revendications 1 à 7, **caractérisée en ce que** le contenant (2) comprend sous la section d'huile (1b) une troisième section de procédé (1c), qui est nommée section d'huile lourde (1c), le contenant (2) comprenant à l'extrémité inférieure une quatrième sortie (19), une cinquième conduite d'alimentation (20) se trouvant à l'extrémité supérieure de la section d'huile lourde (1c), qui comprend une connexion d'écoulement avec la quatrième sortie (19), et la section d'huile lourde (1c) comprenant des éléments d'échange de matière (3) non sensibles aux contaminations, de préférence les mêmes éléments d'échange de matière (3) que la section d'huile (1b).

9. Utilisation d'une colonne (1) selon l'une quelconque des revendications 1 à 8 en tant que colonne de lavage à l'huile dans une unité pour la fabrication d'oléfines à partir de naphta ou de matières premières contenant des hydrocarbures de point d'ébullition plus élevé par clivage de la matière première.
